Europäisches Patentamt

European Patent Office

Office européen des brevets

(11) Veröffentlichungsnummer: **0 312 633**
**A1**

## (12) EUROPÄISCHE PATENTANMELDUNG

(21) Anmeldenummer: 87115447.2

(22) Anmeldetag: 21.10.87

(51) Int. Cl.⁴: **G01M 13/02 , G01B 7/28**

(43) Veröffentlichungstag der Anmeldung:
26.04.89 Patentblatt 89/17

(84) Benannte Vertragsstaaten:
**CH DE FR GB IT LI**

(71) Anmelder: **INSTITUT MASHINOVEDENIA IMENI A.A. BLAGONRAVOVA AKADEMII NAUK SSSR**
**ul. Griboedova 4**
**Moscow, 101830(SU)**

(72) Erfinder: **Afonsky, Boris Dmitrievich**
**Juzhinsky pereulok, 5/I, kv. 5a**
**Moskau(SU)**
Erfinder: **Genkin, Mikhail Dmitrievich**
**Ulitsa Fersmana, 3, kv. 16**
**Moskau(SU)**
Erfinder: **Ditev, Viktor Vasilievich**
**Ljubertsy,Oktyabrsky prospekt,373 korpus B,kv.6**
**Moskovskaya oblast(SU)**

(74) Vertreter: **Lehn, Werner, Dipl.-Ing. et al**
**Hoffmann, Eitle & Partner Patentanwälte**
**Arabellastrasse 4**
**D-8000 München 81(DE)**

(54) **Kontrolleinrichtung für einen kinematischen Zahnradfehler.**

(57) Eine Kontrolleinrichtung für einen kinematischen Zahnradfehler enthält Drehwinkelgeber (3, 5) für ein treibendes (1) und ein getriebenes Zahnrad (2), eine Einheit (7) zur Frequenzangleichung für der Drehgeschwindigkeit der Zahnräder entsprechende Frequenzen, an deren Eingang (8) der erste Drehwinkelgeber (3) angeschlossen ist, einen Phasenvergleicher (10), an dessen Eingänge (9, 11) die Einheit (7) zur Frequenzangleichung und der Drehwinkelgeber (5) angekoppelt sind, eine Torschaltung (13), deren Eingang (14) auf den Ausgang des Phasenvergleichers (10) und deren Ausgang auf ein Registriergerät (12) für den Betrag des kinematischen Fehlers des Zahnradpaares geschaltet ist, und eine Steuereinheit (17) für die Steuerschaltung (13), deren Eingang (18) mit dem Ausgang des Drehwinkelgebers (3 oder 5) für das zu kontrollierende Zahnrad und deren Ausgang mit dem Steuereingang (16) der Torschaltung (13) verbunden ist.

FIG. 1

## KONTROLLEINRICHTUNG FÜR EINEN KINEMATISCHEN ZAHNRADFEHLER

Die Erfindung bezieht sich auf Mittel zur Messung von Fehlern bei Ober- und Aussenflächen und betrifft insbesondere eine Kontrolleinrichtung für einen kinematischen Zahnradfehler.

Die Erfindung kann bei der Fertigung von Zahnrädern und Untersetzungsgetrieben in einem beliebigen Bereich der Technik angewendet werden.

Es ist eine Kontrolleinrichtung für Parameter von Zahnrädern bekannt, die es gestattet, einen kumulativen Schrittfehler bei einem Zahnrad zu ermitteln. Diese Einrichtung enthält einen an einer Drehspindel mit einer Spitze befindlichen Teilkreis, einen gleichachsig zur Spindel angeordneten Stock, ein zwischen den Spitzen der Spindel und des Stocks eingespanntes Aufnahmedorn zur Befestigung eines zu kontrollierenden Zahnrades an diesem sowie einen Schlitten mit einem darauf angeordneten Wegumformer für lineare Verschiebungen.

Bei der Umdrehung der Spindel und folglich auch des zu kontrollierenden Zahnrades um einen Winkelschritt wird der Schlitten vom Kontrollrad in radialer Richtung abgehoben. Nach der winkelmässigen Fixierung der Spindel kehrt der Schlitten in die Ausgangslage zurück. Hierbei kommt der Wegumformer für lineare Verschiebungen mit der Zahnflanke in Berührung und stellt bei deren ungenauer Herstellung in tangentialer Richtung diese Abweichung fest. Die sukzessive Messung der Abweichung bei jeder Zahnflanke wird zur Ermittlung eines kumulativen Schrittfehlers bei dem zu kontrollierenden Zahnrad (Taits B.A. "Tochnost i kontrol zubchatykh koles" /"Genauigkeit und Kontrolle von Zahnrädern"/, 1972 (Moskau), S. 244 bis 246) ausgenutzt.

Die mit dieser Einrichtung vorgenommenen Messungen weisen einen grossen Messfehler auf, der von der Genauigkeit der Einstellung des Kontaktpunktes des Wegumformers für lineare Verschiebungen auf der Zahnfläche sowohl in Bezug auf die Achse des zu kontrollierenden Zahnrades als auch in Bezug auf die Stirnfläche, von der Profilrauhigkeit und der Arbeitsintensität der Winkelschrittmessung unter Benutzung eines Teilkreises abhängt.

Es ist auch eine Kontrolleinrichtung für einen kinematischen Zahnradfehler bekannt, die einen Drehwinkelgeber für das treibende Rad eines Zahnradpaares, der auf der Achse des letzteren angeordnet ist, einen Drehwinkelgeber für das getriebene Rad, der auf der Drehachse des letzteren angeordnet ist, eine Einheit zur Frequenzangleichung für der Drehgeschwindigkeit des getriebenen und des treibenden Zahnrades entsprechende Frequenzen enthält, an deren Eingang der Ausgang des Drehwinkelgebers für das treibende Zahnrad angeschlossen ist. Der Ausgang der Einheit zur Frequenzangleichung ist an einen Eingang eines Phasenvergleichers geschaltet, an dessen anderen Eingang der Drehwinkelgeber für das getriebene Zahnrad gekoppelt ist, während am Ausgang des Phasenvergleichers ein Signal erzeugt wird, das dem kinematischen Fehler des Kontroll-Zahnradpaares entspricht und in einem Registriergerät für den Betrag des kinematischen Fehlers (SU, A, 920363, Markov A.L. "Izmerenie zubchatykh koles" ("Messungen bei Zahnrädern"), 1977 (Leningrad), S. 121) eintrifft.

Die Einheit zur Frequenzangleichung enthält eine Reihenschaltung aus einem Signalfrequenzvervielfacher und einem -teiler.

Beim Abwälzen von Zahnrädern, beispielsweise mit einer gleichen Zähnerzahl, d.h. bei $z_1 = z_2$, kommen die Signale mit einer gleichen Frequenz $f_1 = f_2$ von den Drehwinkelgebern für das getriebene und das treibende Zahnrad beim Phasenvergleicher an. Die zwischen den zwei Signalen mit den Frequenzen $f_1$ und $f_2$ entstehenden Phasenverschiebungen sind durch eine Winkelabweichung bei den mit den aufeinander abwälzenden Rädern verbundenen Drehwinkelgebern für ein angetriebenes und ein treibendes Glied bedingt. Das zur Phasendiffe renz proportionale Signal gelangt in das Registriergerät, weil es einen Wert darstellt, der zum kinematischen Fehler bei den aufeinander abwälzenden Zahnrädern proportional ist.

Bei einer Zähnerzahl des getriebenen Rades, die ungleich der Zähnerzahl des treibenden Rades ist, d.h. bei $z_1 \neq z_2$, treffen die Signale vom Drehwinkelgeber für das treibende Zahnrad bei der Einheit zur Frequnzangleichung ein, und die Signalfrequenz vom Ausgang des Drehwinkelgebers füar das treibende Zahnrad wird an die Signalfrequenz vom Ausgang des Drehwinkelgebers für das getriebene Zahnrad angeglichen. Nach der Frequenzangleichung gelangen die Signale in den Phasenvergleicher, der eine Phasendifferenz feststellt, und das der Phasendifferenz proportionale Signal entspricht dem Betrag des kinematischen Fehlers beim Abwälzen der Zahnräder.

Mit Hilfe dieser bekannten Einrichtung ist es nicht möglich, einen kumulativen Schrittfehler beim Zahnrad zu ermitteln, weshalb die von der Einrichtung kommende Information nicht ausreicht, um die Herstellungsgüte der Zahnräder zu bewerten. Ohne Kenntnis des Betrages des kumulativen Schrittfehlers beim Zahnrad ist es nicht möglich, den Betrag und die Phase einer Störkraft zu ermitteln und dynamische Berechnungen durchzuführen, die mit der Bestimmung von Amplituden erzwungener Schwingungen von Zahnradelementen bei dem Rotationsfrequenzen zusammenhängen. Außerdem sind ohne Kenntnis des Betrages und der Anfangsphase des kumulativen Schrittfehlers des Zahnrades die Auswuchtgenauigkeit und die Reihenfolge der Auswuchtung der Zahnräder nicht zu bestimmen, denn die Schwingungskraft wird bei den Rotationsfrequenzen nicht nur durch die bleibende Unwucht, sondern auch durch den kumulativen Schrittfehler des Zahnrades festgelegt.

Darüber hinaus ist die Kenntnis der Schrittfehler des Zahnrades notwendig, um Festigkeit, Lebensdauer, Verschleißfestigkeit, Geräuschpegel und Schwingfähig keit von Zahnradreduziergetrieben zu ermitteln.

Der Erfindung liegt die Aufgabe zugrunde, eine Kontrolleinrichtung für einen kinematischen Zahnradfehler zu schaffen, die es gestattet, die Anzahl von Kontrollparametern eines Zahnrades durch Änderung der Funktionsschaltung der gesamten Einrichtung zu vergrößern.

Diese Aufgabe wird dadurch gelöst, daß die Kontrolleinrichtung für einen kinematischen Fehler bei ein Zahnradpaar mit einem treibenden und einem getriebenen Zahnrad bildenden Zahnrädern, die einen Drehwinkelgeber für das treibende Zahnrad, der auf der Drehachse des letzteren angeordnet ist, einen Drehwinkelgeber für das getriebene Rad, der auf der Drehachse des letzteren angeordnet ist, eine Einheit zur Frequenzangleichung für der Drehgeschwindigkeit des getriebenen und des treibenden Zahnrades entsprechende Frequenzen, an deren Eingang der Ausgang des Drehwinkelgebers für das treibende Zahnrad geschaltet ist, einen Phasenvergleicher enthält, an dessen Eingänge der Ausgang der Einheit zur Frequenzangleichung und der Ausgang des Drehwinkelgebers für das getriebene Zahnrad gekoppelt sind und an dessen Ausgang ein Signal erzeugt wird, das dem kinematischen Fehler des zu kontrollierenden Zahnradpaares entspricht und in einem Registriergerät für den Betrag des kinematischen Fehlers eintrifft, gemäß der Erfindung eine Torschaltung, deren Eingang an den Ausgang des Phasenvergleichers und deren Ausgang an das Registriergerät angeschlossen ist, und eine Steuereinheit für die Torschaltung zur Auswahl von Informationen über den Betrag und die Art eines kumulativen Schrittfehlers beim zu kontrollierenden Zahnrad, ausgehend vom gewonnenen kinematischen Zahnradpaarfehler, aufweist, deren Eingang mit einem Ausgang desjenigen Drehwinkelgebers, der auf der Drehachse des mit dem zu kontrollierenden Zahnrad im Eingriff stehenden Zahnrades angeordnet ist, und deren Ausgang mit dem Steuereingang der Torschaltung verbunden ist.

Es ist zweckmäßig, daß die Steuereinheit für die Torschaltung zur Auswahl von Informationen über den Betrag und die Art eines kumulativen Schrittfehlers einen Impulszähler von dem Drehwinkel eines Zahnes des mit dem zu kontrollierenden Zahnrad im Eingriff stehenden Zahnrades entsprechenden Impulsen, dessen Eingang an einen Ausgang desjenigen Drehwinkelgebers angeschlossen ist, der auf der Drehachse des mit dem zu kontrollierenden Zahnrad im Eingriff stehenden Zahnrades angeordnet ist, und einen ersten Signalverzögerungskreis enthält, dessen Eingang an den Ausgang des Impulszählers angekoppelt ist.

Bei Benutzung des Registriergeräts für den Betrag eines kinematischen Fehlers unter Verwendung eines beweglichen Informationsträgers erwies es sich als vorteilhaft, daß die Einrichtung eine Steuereinheit für die Bewegung des Informationsträgers aufweist, deren Eingang mit dem Ausgang des Impulszählers und deren Ausgang mit dem Steuereingang des Registriergeräts verbunden ist.

Die Steuereinheit für die Bewegung des Informationsträgers kann einen zweiten Signalverzögerungskreis, dessen Eingang als Eingang der gesamten Steuereinheit für die Bewegung des Informationsträgers wirkt, und eine Torschaltung enthalten, deren Eingang mit dem Ausgang des zweiten Verzögerungskreises gekoppelt ist und deren Ausgang als Ausgang der gesamten Steuereinheit für die Bewegung des Informationsträgers fungiert.

Die Erfindung soll nachstehend durch die Beschreibung eines Ausführungsbeispiels anhand der beiliegenden Zeichnungen näher erläutert werden. Es zeigt:

Fig. 1 ein Prinzipschaltbild einer erfindungsgemäßen Kontrolleinrichtung für kinematische Parameter von Zahnrädern,

Fig. 2 ein Prinzipschaltbild einer anderen Ausführungsform der erfindungsgemäßen Einrichtung,

Fig. 3a, b, c, d, e, f, j Zeitdiagramme, die die Arbeit der erfindungsgemäßen Einrichtung veranschaulichen.

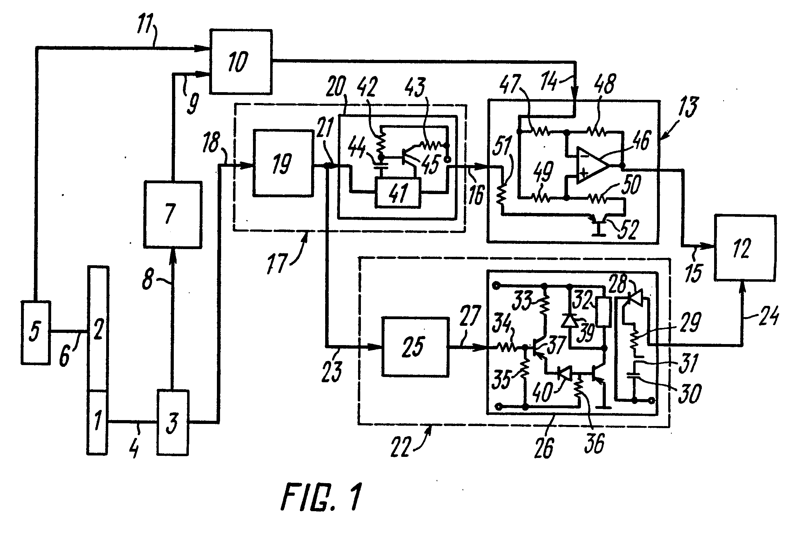

Die Kontrolleinrichtung für einen kinematischen Fehler von ein Zahnradpaar mit einem treibenden 1 (Fig. 1) und einem getriebenen Zahnrad 2 bildenden Zahnrädern enthält einen Drehwinkelgeber 3 für das treibende Zahnrad 1, der auf der Drehachse 4 des letzteren angeordnet ist, einen Drehwinkelgeber 5 für das treibende Rad 2, der auf der Drehachse 6 des letzteren angeordnet ist, eine Einheit 7 zur Frequenzangleichung für der Drehgeschwindigkeit des getriebenen 2 und des treibenden Zahnrades 1 entsprechende Frequenzen, an deren Eingang 8 der Ausgang des Drehwinkelgebers 3 für das treibende Zahnrad 1 angeschlossen ist.

Der Ausgang der Einheit 7 ist an einen Eingang 9 eines Phasenvergleichers 10 angeschaltet, an dessen anderen Eingang 11 der Drehwinkelgeber 5 gekoppelt und an dessen Ausgang ein einem kinematischen Fehler des zu kontrollierenden Zahnradpaares entsprechendes und im Registriergerät 12 für den Betrag des kinematischen Fehlers eintreffendes Signal erzeugt wird.

Hierbei ist an den Ausgang des Phasenvergleichers 10 ein Eingang 14 einer Torschaltung 13 angeschlossen, deren Ausgang mit dem Eingang 15 des Geräts 12 verbunden ist. Der Steuereingang 16 der Torschaltung 13 ist mit dem Ausgang einer Steuereinheit 17 für die Torschaltung 13 zur Auswahl von Informationen über den Betrag und die Art eines kumulativen Schrittfehlers beim zu kontrollierenden Zahnrad, ausgehend vom gewonnenen kinematischen Fehler des Zahnradpaares, gekoppelt.

Im vorliegenden Beispiel ist als zu kontrollierendes Zahnrad das getriebene Rad 2 akzeptiert.

Der Eingang 18 der Einheit 17 ist mit dem Ausgang des Drehwinkelgebers 3 für das treibende Zahnrad 1 gekoppelt. Die Steuereinheit 17 für die Torschaltung 13 zur Auswahl von Informationen über den Betrag und die Art eines kumulativen Schrittfehlers weist einen Impulszähler 19 von dem Drehwinkel eines Zahnes des zu kontrollierenden Zahnrades 1 entsprechenden Impulsen, dessen Eingang als Eingang der Einheit 17 auftritt und mit einem Ausgang des Drehwinkelgebers 3 für das zu kontrollierenden Zahnrad 1 verbunden ist, und einen Signalverzögerungskreis 20 auf, dessen Eingang 21 an den Ausgang des Impulszählers 19 angeschaltet ist und dessen Ausgang als Ausgang der gesamten Steuereinheit 17 für die Torschaltung 13 fungiert.

Bei Benutzung des Registriergeräts 12 für den Betrag des kinematischen Fehlers unter Verwendung eines beweglichen Informationsträgers, wie er ein Magnetband oder ein beliebiger anderer ähnlicher Träger ist, besitzt die Einrichtung eine Steuereinheit 22 für die Bewegung des Informationsträgers, deren Eingang 23 mit dem anderen Ausgang der Einheit 17 und deren Ausgang mit dem Steuereingang 24 des Registriergeräts 12 gekoppelt ist.

Die Steuereinheit 22 für die Bewegung des Informationsträgers enthält einen Signalverzögerungskreis 25, dessen Eingang als Eingang der gesamten Einheit 22 wirkt, und einen Thyristorschalter 26, dessen Eingang 27 mit dem Ausgang des Verzögerungskreises 25 verbunden ist und dessen Ausgang als Ausgang der gesamten Einheit 22 fungiert.

Der Thyristorschalter 26 ist in bekannter Schaltung aufgebaut und umfaßt einen Thyristor 28, einen Widerstand 29, einen Kondensator 30 und einen normal offenen Kontakt 31 eines Relais 32.

Darüber hinaus enthält er Widerstände 33, 34, 35 und 36, Transistoren 37 und 38 sowie Dioden 39 und 40.

Als Verzögerungskreise 20 und 25 gelangen weit bekannte Schaltkreise, beispielsweise ein Monoflop, zum Einsatz, das einen Impulsformer 41 und einen Widerstand 42, einen Kondensator 44 und einen Transistor 45 aufweist.

In Fig. 1 ist eine Ausführungsform einer Torschaltung 13 dargestellt, die einen Operationsverstärker 46, Widerstände 47, 48, 49, 50 und 51 sowie einen Transistor 52 enthält.

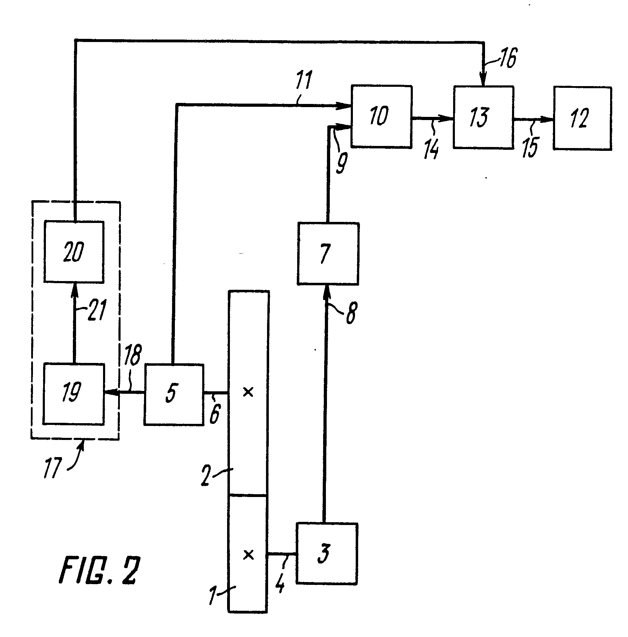

Fig. 2 zeigt eine andere Ausführungsform der gleichen Einrichtung, in der als zu kontrollierendes Zahnrad das treibende Zahnrad 1 akzeptiert ist. In dieser Einrichtung ist die Steuereinheit 17 für die Torschaltung 13 mit ihrem Eingang 18 an einen Ausgang des Drehwinkelgebers 5 angeschlossen.

Die Einrichtung arbeitet wie folgt.

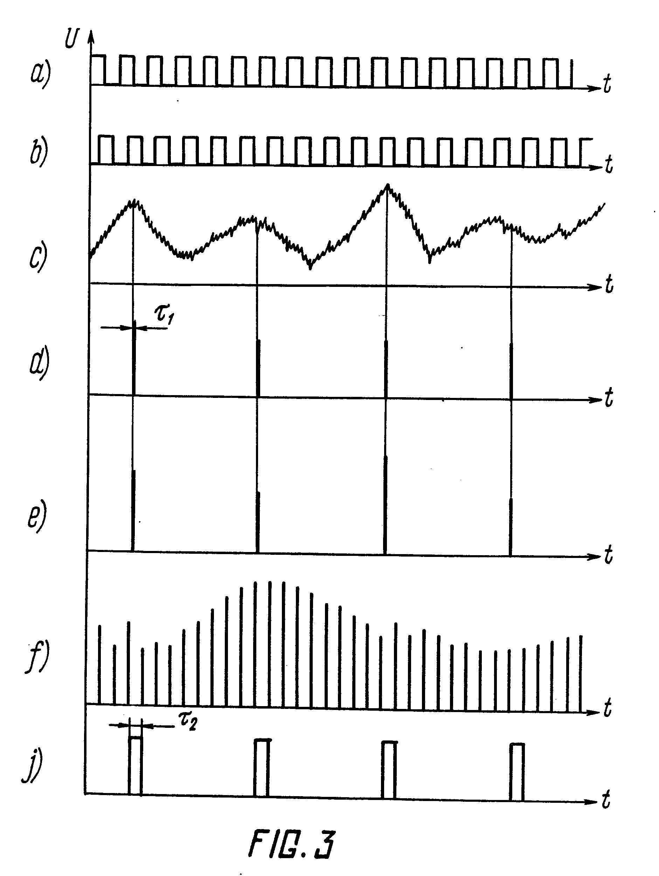

Bei einem ununterbrochenen Abwälzen der Zahnräder 1 und 2 des Paares kommen von den Drehwinkelgebern 3 und 5 elektrische Rechtecksignale (Fig. 3a, b) an. Diese Signale werden nach der Frequenz mit Hilfe der Einheit 7 zur Frequenzangleichung angeglichen und gelangen an die Eingänge des Phasenvergleichers 10. Vom Ausgang des Phasenvergleichers 10 trifft das Signal eines kinematischen Fehlers der Zahnräder 1, 2 am Eingang 14 der Torschaltung 13 (Fig. 3c) ein, die im gesperrten Zustand verharrt, bis an deren Steuereingang 16 ein Steuerimpuls angekommen ist.

Mit Erscheinen des Impulses am Steuereingang 16 (Fig. 3d) der Torschaltung 13 schaltet sie durch, und die Information von der Winkellage des ersten Zahnes wird über das zu kontrollierende Zahnrad 2 auf das Registriergerät 12 (Fig. 3e, f) übertragen.

Der Steuerimpuls wird aus einem vom Drehwinkelgeber 3 kommenden elektrischen Signal geformt und wird dann auf den Eingang der Steuereinheit 17 für die Torschaltung 13 gegeben. Der als Untersetzer betriebene Zähler 19 arbeitet im Betrieb der (periodischen) Dauerwirkung, wenn an dessen Ausgang Impulse mit einer Frequenz f/k und mit einer Dauer auftreten, die der Dauer des Eingangssignals gleich ist.

Vom Ausgang des Zählers 19 trifft das Steuersignal am Eingang 21 des Verzögerungskreises 20 und am Eingang des Verzögerungskreises 25 der Steuereinheit 22 für die Bewegung des Informationsträgers ein. In den Verzögerungskreisen 20, 25 werden Rechteckimpulse vorgegebener Dauer $\tau_1$ und $\tau_2$ (Fig. 3d, j) erzeugt, die die analoge Torschaltung 13 bzw. den Thyristorschalter 26 steuern.

Die Dauer $\tau_1$ und $\tau_2$ der Rechteckimpulse am Ausgang der Verzögerungskreise 20, 25, wird laut Parametern der zu kontrollierenden Zahnräder vorgegeben.

Die Verzögerungskreise 20 und 25 für die Dauer der Steuerimpulse liefern Steuersignale auf die Torschaltung 13, um die Meßdaten zum Registriergerät 12 und zum Thyristorschalter 26 für die Steuerung der Bewegung des Informationsträgers synchron durchkommen zu lassen.

Die vorliegende Kontrolleinrichtung für einen kinematischen Fehler eines Zahnradpaares gestattet es, einen kumulativen Schrittfehler beim Rad durch dessen Abwälzen auf einem mit diesem im Eingriff stehenden Zahnrad zu ermitteln, das mit gleicher Genauigkeitsgrad wie das zu kontrollierende Zahnrad gefertigt wird; dies kann durch keine andere Einrichtung ausgeführt werden, die in ähnlicher Weise arbeitet. Diese zusätzliche Information gibt die Möglichkeit, die Aufgaben über die Parameter des Zahnrades hinsichtlich der Genauigkeit, über die Vorbereitung des Fertigungsvorganges für die Herstellung der Zahnräder sowie über die Verhaltensweise des Zahnrades unter den Betriebsbedingungen zu erweitern.

**Ansprüche**

1. Kontrolleinrichtung für einen kinematischen Fehler bei ein Zahnradpaar mit einem treibenden (1) und einem getriebenen Zahnrad (2) bildenden Zahnrädern, die einen Drehwinkelgeber (3) für das treibende Zahnrad (1), der auf der Drehachse (4) des letzteren angeordnet ist, einen Drehwinkelgeber (5) für das getriebene Rad (2), der auf der Drehachse (6) des letzteren angeordnet ist, eine Einheit (7) zur Frequenzangleichung für der Drehgeschwindigkeit des getriebenen (2) und des treibenden Zahnrades (1) entsprechende Frequenzen, auf deren Eingang (8) der Ausgang des Drehwinkelgebers (3) für das treibende Zahnrad (1) geschaltet ist, einen Phasenvergleicher (l0) enthält, an dessen Eingänge (9, 11) der Ausgang der Einheit (7) zur Frequenzangleichung und der Ausgang des Drehwinkelgebers (5) für das getriebene Zahnrad (2) gekoppelt sind und an dessen Ausgang ein Signal erzeugt wird, das dem kinematischen Fehler des zu kontrollierenden Zahnradpaares entspricht und in einem Registriergerät (12) für den Betrag des kinematischen Fehlers eintrifft, dadurch **gekennzeichnet,** dass sie eine Torschaltung (13), deren Eingang (14) an den Ausgang des Phasenvergleichers (10) und deren Ausgang an das Registriergerät (12) angeschlossen ist, und eine Steuereinheit (17) für die Torschaltung (13) zur Auswahl von Informationen über den Betrag und die Art eines kumulativen Schrittfehlers beim zu kontrollierenden Zahnrad (1 oder 2), ausgehend vom gewonnen kinematischen Fehler des Zahnradpaares, aufweist, deren Eingang (18) mit dem Ausgang desjenigen Drehwinkelgebers (3 oder 5), der auf der Drehachse (4 oder 6) des mit dem zu kontrollierenden Zahnrad im Eingriff stehenden Zahnrades (1 oder 2) angeordnet ist, und deren Ausgang mit dem Steuereingang (16) der Torschaltung (13) verbunden ist.

2. Einrichtung nach Anspruch 1, dadurch **gekennzeichnet,** dass die Steuereinheit (17) für die Torschaltung (13) zur Auswahl von Informationen über den Betrag und die Art eines kumulativen Schrittfehlers einen Impulszähler (19) von dem Drehwinkel eines Zahnes des mit dem Kontroll-Zahnrad im Eingriff stehenden Zahnrades (1 oder 2) entsprechenden Impulsen, dessen Eingang an einen Ausgang desjenigen Drehwinkelgebers (3 oder 5) angeschlossen ist, der auf der Drehachse (4 oder 6) des mit dem zu kontrollierenden Zahnrad im Eingriff stehenden Zahnrades (1 oder 2) angeordnet ist, und einen ersten Signalverzögerungskreis (20) enthält, dessen Eingang (21) an den Ausgang des Impulszählers (19) angekoppelt ist.

3. Einrichtung nach Anspruch 2, dadurch **gekennzeichnet,** dass sie bei Benutzung des Registriergeräts (12) für den Betrag eines kinematischen Fehlers unter Verwendung eines beweglichen Informationsträgers eine Steuereinheit (22) für die Bewegung des Informationsträgers aufweist, deren Eingang (23) mit dem Ausgang des Impulszählers (19) und deren Ausgang mit dem Steuereingang (24) des Registriergeräts (12) verbunden ist.

4. Einrichtung nach Anspruch 3, dadurch **gekennzeichnet,** dass die Steuereinheit (22) für die Bewegung des Informationsträgers einen zweiten Signalverzögerungskreis (25), dessen Eingang als Eingang der gesamten Steuereinheit (22) für die Bewegung des Informationsträgers wirkt, und eine Torschaltung (26) enthält, deren Eingang (27) mit dem Ausgang des zweiten Verzög ungskreises (25) gekoppelt ist und deren Ausgang als Ausgang der gesamten Steuerinheit (22) für die Bewegung des Informationsträgers fungiert.

FIG. 1

EP 0 312 633 A1

FIG. 2

FIG.3

**Europäisches Patentamt**

**EUROPÄISCHER RECHERCHENBERICHT**

Nummer der Anmeldung

EP 87 11 5447

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 336 711 (ONO SOKKI CO., LTD) <br> * Insgesamt * <br> --- | 1-4 | G 01 M 13/02 <br> G 01 B 7/28 |
| Y | US-A-3 816 712 (K. HERZOG) <br> * Insgesamt * <br> --- | 1-4 | |
| A | US-A-3 574 947 (K. STEPANEK et al.) <br> * Insgesamt * <br> --- | 1-4 | |
| A | FR-A-2 458 803 (CERMO) <br> * Insgesamt * <br> ----- | 1-4 | |

**RECHERCHIERTE SACHGEBIETE (Int. Cl.4)**

G 01 M 13/00
G 01 B 7/00

Der vorliegende Recherchenbericht wurde für alle Patentansprüche erstellt

| Recherchenort | Abschlußdatum der Recherche | Prüfer |
|---|---|---|
| DEN HAAG | 08-07-1988 | BROCK T.J. |